# EUROPÄISCHE PATENTANMELDUNG

(11) **EP 4 317 736 A1**
(43) Veröffentlichungstag der Anmeldung: **07.02.2024**
(21) Anmeldenummer: 23181515.0
(22) Anmeldetag: 26.06.2023
(51) Int. Cl.: F16F 1/38

(54) **BUCHSENLAGER MIT MEHRTEILIGEM ELASTOMERKÖRPER**

(30) Priorität: 12.07.2022 DE 102022117281
(71) Anmelder: VORWERK AUTOTEC GmbH & Co. KG, 42287 Wuppertal (DE)
(72) Erfinder: Beljanin, Alexej, 44629 Herne (DE)
(74) Vertreter: Lippert Stachow Patentanwälte Rechtsanwälte

(57) **Zusammenfassung**

Die Erfindung betrifft ein Buchsenlager 1 für ein Kraftfahrzeug umfassend ein, sich in einer Längsrichtung X erstreckendes Kernelement 2, einen Elastomerkörper 4 sowie ein Außenrohr 8, wobei das Kernelement 2 an einem Längsende einen sich in Längsrichtung X aus dem Elastomerkörper 4 heraus erstreckenden (abgeflachten) Befestigungsabschnitt 20a, 20b aufweist und das Außenrohr 8 zur Anordnung in einer zugeordneten Lageraufnahme, insbesondere einer Lageraufnahme eines Lenkers ausgebildet ist. Das Kernelement 2 umfasst ein Metall-Strangpressprofil und der Elastomerkörper 4 ist mehrteilig, insbesondere zweiteilig ausgebildet und umfasst eine Kernhülse mit einer Aufnahme zur Aufnahme des Kernelements 2 sowie eine Außenhülse und zumindest eine zwischen Kernhülse und Außenhülse angeordnete Elastomerlage, wobei das Außenrohr 8 die mehreren Teile des Elastomerkörper 4 zueinander radial fixiert und ein Formschluss zwischen Kernelement 2 und Kernhülse des Elastomerkörpers 4 in Längsrichtung X ausgebildet ist.

## Beschreibung

Die Erfindung betrifft ein Buchsenlager für ein Kraftfahrzeug, umfassend ein sich in einer Längsrichtung erstreckendes Kernelement, einen Elastomerkörper sowie ein, das Kernelement und den Elastomerkörper umgreifendes und eine dem Elastomerkörper zugewandte Innenmantelfläche und eine dem Elastomerkörper abgewandte Außenmantelfläche aufweisendes Außenrohr, wobei das Kernelement an einem Längsende einen sich in Längsrichtung aus dem Elastomerkörper heraus erstreckenden Befestigungsabschnitt zur Befestigung des Buchsenlagers an einem Abschnitt des Kraftfahrzeuges aufweist und das Außenrohr zur Anordnung in einer zugeordneten Lageraufnahme, insbesondere einer Lageraufnahme eines Lenkers ausgebildet ist.

Ein derartiges Buchsenlager, häufig auch als elastomeres Buchsenlager bezeichnet, ist auf dem Gebiet wohl bekannt. Dabei kann das Außenrohr des Lagers wie angegeben zur Befestigung in einer zugeordneten Lageraufnahme (Lagerauge) eines Lenkers und das Kernelement zur Befestigung z.B. an dem Fahrzeugrahmen, der Karosserie oder einem Achsträger des Fahrzeuges ausgebildet sein. Solche Lager werden beispielsweise an Querlenkern verwendet, die insbesondere bei der Einzelradaufhängung an Kraftfahrzeugen quer zur Fahrtrichtung angeordnet sind. Wesentliche Betriebsparameter solcher elastomerer Buchsenlager sind die axiale Steifigkeit, die torsionale Steifigkeit, die radiale Steifigkeit und das kardanische Verhalten des Lagers, welche durch spezifische Gestaltung des Elastomerkörpers einstellbar sind. Vorzugsweise ist das Kernelement im Stand der Technik als Druckgussteil oder Schmiedeteil hergestellt. Damit verbunden ist eine gewisse radiale Dicke des Kernelements, was mit einer erhöhten torsionalen Steifigkeit des Lagers einhergeht, da diese vom Abstand der Lagerachse zur Gummispur abhängt. Darüber hinaus besteht bei solchen Lagern der grundsätzliche Bedarf, das Antwortverhalten zu verbessern und gleichzeitig durch eine entsprechende Gestaltung des Lagers eine kostengünstige Herstellung bereitzustellen.

Die obigen Nachteile herkömmlicher elastomerer Buchsenlager löst die vorliegende Erfindung zumindest teilweise schon mit einem Buchsenlager, umfassend die Merkmale von Anspruch 1.

Das erfindungsgemäße Buchsenlager für eine Kraftfahrzeug umfasst ein sich in einer Längsrichtung erstreckendes Kernelement, einen insbesondere radial außen zum Kernelement angeordneten Elastomerkörper sowie ein das Kernelement und den Elastomerkörper umgreifendes Außenrohr, das eine dem Elastomerkörper zugewandte Innenmantelfläche und eine dem Elastomerkörper abgewandte Außenmantelfläche aufweist. Das Kernelement weist zumindest an einem Längsende einen sich in Längsrichtung aus dem Elastomerkörper heraus erstreckenden Befestigungsabschnitt, der abgeflacht ausgebildet sein kann, wobei das Außenrohr zur Anordnung in einer zugeordneten Lageraufnahme, insbesondere einer Lageraufnahme eines Lenkers ausgebildet ist. Das erfindungsgemäße Buchsenlager zeichnet sich dadurch aus, dass das Kernelement ein Metall-Strangpressprofil umfasst, dass der Elastomerkörper mehrteilig, insbesondere zweiteilig, ausgebildet ist und eine Kernhülse mit einer Aufnahme zur Aufnahme des Kernelements sowie eine Außenhülse und zumindest eine zwischen Kernhülse und Außenhülse angeordnete Elastomerlage umfasst. Im zusammengesetzten Zustand des Lagers fixiert das Außenrohr die mehreren Teile des Elastomerkörpers in Richtungen senkrecht zur Längsrichtung, d.h. radial, wobei ein Formschluss zwischen Kernelement und Kernhülse des Elastomerkörpers in Längsrichtung ausgebildet ist.

Durch die erfindungsgemäße Gestaltung des Buchsenlagers, d.h. durch das Ausbilden des Kernelements als Metall-Strangpressprofil und durch das Aufnehmen des Kernelements in einer Kernhülse eines zumindest zweiteiligen Elastomerkörpers, ergibt sich im Vergleich zum herkömmlichen Lager eine Kosteneinsparung, insbesondere aufgrund der Ausbildung des Kernelements, darüber hinaus eine Gewichtseinsparung und damit eine Verbesserung des Ansprechverhaltens. Darüber hinaus ist durch die Gestaltung eines gegenüber dem Elastomer festen Innenkerns des Lagers mittels des Kernelements und der Kernhülse des Elastomerkörpers eine erhöhte Flexibilität in der Gestaltung des Innenteils bezüglich seiner radialen Ausdehnung bereitgestellt, sodass das erfindungsgemäße Buchsenlager ohne größeren Gestaltungsaufwand mit einer vergleichsweisen geringen torsionalen Steifigkeit ausbildbar ist.

Die Angabe "mehrteiliger, beispielsweise zweiteiliger Elastomerkörper" kann insbesondere meinen, dass die Teile des Elastomerkörpers in umfänglicher Richtung relativ zur Längsrichtung aufeinanderfolgend angeordnet sein können im Unterschied zu einer Gestaltung, bei welcher die Teile des Elastomerkörpers in radialer Richtung aufeinander folgen. Bei einem beispielhaften zylinderförmigen Elastomerkörper, der zweiteilig ausgebildet ist, wobei die Schnittachse die Längsachse des Elastomerkörpers umfasst, wären diese beiden Teile als Halbzylinder ausgebildet, während im zweiten Fall, bei welchem die Teile radial aufeinander folgen, der erste Teil zylinderförmig und der zweite, den ersten Teil aufnehmende Teil des Elastomerkörpers, hohlzylinderförmig aufgebaut wäre. Der Unterschied in Bezug auf die Anordnung der Teile, d.h. radial oder umfänglich, kann auch in Bezug auf eine gedachte Schnittfläche im Elastomerkörper formuliert werden. Während beim ersten Fall gedachte Schnittflächen des Elastomerkörpers zur Festlegung mehrerer Teile als ebene Flächen ausgebildet sein können, die im zusammengesetztem Zustand des Elastomerkörpers aneinander liegen, sind die entsprechenden Schnittflächen des Elastomerkörpers im zweiten Fall gekrümmte Flächen, im vorgegebenen Beispiel Zylinderflächen.

Die Angabe *"*Formschluss zwischen Kernelement und Kernhülse des Elastomerkörpers in Längsrichtung*"* kann meinen, dass im zusammengesetzten Zustand des Buchsenlagers die Einzelteile Kernelement und mehrteiliger Elastomerkörper so zueinander angeordnet sind, dass eine relative Bewegung zwischen Kernelement und Kernhülse des Elastomerkörpers in Längsrichtung des Lagers bzw. des Kernelements blockiert ist. Dabei kann vorgesehen sein, dass durch aneinanderliegende Anlageflächen (Formschlussflächen) des Kernelements und der Kernhülse des Elastomerkörpers eine relative Verschiebung der beiden Teile zueinander verhindert ist. Das die Teile des Elastomerkörpers umgreifende Außenrohr dient hier neben der Bereitstellung einer Anlagefläche in einer zugeordneten Lageraufnahme ferner zur Fixierung der Einzelteile des das Kernelement aufnehmenden Elastomerkörpers zueinander, sodass das Lösen des Formschlusses zwischen dem Elastomerkörper und dem Kernelement durch radiales Auseinanderbewegen der Teile des Elastomerkörpers blockiert ist.

Zweckmäßigerweise kann vorgesehen sein, dass in Einbaulage der genannten Bauteile des Buchsenlagers neben dem Formschluss zwischen Kernelement und Kernhülse des Elastomerkörpers in Längsrichtung auch ein Formschluss zwischen Kernelement und Kernhülse tangential zur genannten Längsrichtung ausgebildet ist. Insbesondere kann vorgesehen sein, dass in zusammengesetzten Betriebszustand des erfindungsgemäßen Lagers, eine relative Lageränderung des Kernelements und der Kernhülse des Elastomerkörpers zueinander, insbesondere durch Verschieben oder Verdrehen, in beliebige Richtungen, blockiert ist.

Die Angabe *"*das Kernelement umfasst ein Metall-Strangpressprofil" kann insbesondere meinen, dass das Kernelement als Metall-Strangpressprofil ausgebildet ist, insbesondere als Metall-Strangpressprofil, dass keinerlei Hohlräume aufweist und insofern als Vollmaterial in Pressrichtung ausgebildet sein kann. Es sei bemerkt, dass die vorstehende Angabe "Metall-Strangpressprofil" zur Gestaltung des Kernelements ein vom hergestellten Strang abgelenktes Teil bzw. abgelängter Abschnitt meint. Zweckmäßigerweise kann vorgesehen sein, dass das Kernelement einstückig ausgebildet ist mit einer Längserstreckung, die zumindest zehnmal, insbesondere zwanzigmal größer als die Dicken- bzw. eine Quererstreckung senkrecht zur Längserstreckung ist. Die Dicke des Kernelements kann dabei durch die Ablänglänge vom Strang festgelegt sein.

Die Angabe *"*Längsachse des Buchsenlagers*"* und/oder "Längsachse des Elastomerkörpers*"* kann eine Achse in Einbaulage der Bauteile des erfindungsgemäßen Buchsenlagers meinen, die koaxial zur Achse des Außenrohrs, insbesondere auch parallel zur Längserstreckung bzw. Längsrichtung des Kernelements verläuft.

Weiterbildungen der Erfindung sowie zusätzliche erfindungsgemäße Merkmale sind in der allgemeinen Beschreibung, den Figuren, der Figurenbeschreibung sowie den Unteransprüchen angegeben.

Zweckmäßigerweise kann vorgesehen sein, dass das Kernelement in kartesischen Koordinaten in Längsrichtung seine größte Erstreckung aufweist, in zur Längsrichtung senkrecht orientierte Ablängrichtung zur Festlegung der Dicke des Kernelements (Dickenrichtung) die geringste Erstreckung bzw. das geringste Maß aufweist und in eine Richtung senkrecht zur Längsrichtung und senkrecht zur Ablängrichtung (Querrichtung) eine Erstreckung die zumindest über seine gesamte Längserstreckung das 1,5 fache, insbesondere das doppelte Maß der Dickenerstreckung aufweist. Herstellungsbedingt kann das Kernelement ein Paar von zwei parallel zueinander verlaufenden Schnittflächen, die Ablängflächen durch ein Abschneiden vom Strang darstellen, aufweisen.

Bei der Gestaltung der einzelnen Teile des Elastomerkörpers, die bei der Montage des Buchsenlagers zusammensetzbar sind, kann zweckmäßigerweise vorgesehen sein, dass ein solches Elastomerkörperteil einstückig aufgebaut ist, d.h. dass einzelne Bauteilabschnitte wie Kernhülsenabschnitt, Außenhülsenabschnitt und Elastomerlagenabschnitt stoffschlüssig miteinander verbunden sind, zur Festlegung der elastomeren Eigenschaften des jeweiligen Elastomerkörperteils. Dabei kann vorgesehen sein, dass der Stoffschluss zwischen den Bestandabschnitten des jeweiligen Teils des Elastomerkörpers durch Anvulkanisieren miteinander verbunden sind. Bei einem zweiteiligen Elastomerkörper kann beispielsweise vorgesehen sein, dass die beiden Teile des Elastomerkörpers identisch aufgebaut sind und zumindest einen Abschnitt Kernhülse in Form einer Halbschale, einen Abschnitt Außenhülse in Form einer Halbschale und zumindest einen zwischen Kernhülsenhalbschale und Außenhülsenhalbschale angeordnete Elastomerlagenabschnitt in der Gestalt einer Halbschale umfasst und die genannten Abschnitte stoffschlüssig durch jeweiliges Anvulkanisieren miteinander verbunden sind. Bei einem zweiteiligen Elastomerkörper, bei welchem der zusammengesetzte Elastomerkörper eine zylinderartige Gestalt aufweist, und beide Elastomerkörperteile eine zumindest annähernd gleiche Gestalt aufweisen, können diese eine halbzylinderartige Gestalt aufweisen, wobei die halbzylinderartigen Elastomerkörperteile im zusammengesetzten Zustand des Lagers an einanander zugeordneten Begrenzungsflächen aneinander liegen zur Ausbildung des Elastomerkörpers und damit zur Ausbildung der Aufnahme des Kernelements.

Um die radiale Steifigkeit des erfindungsgemäßen Buchsenlagers zu erhöhen, kann zweckmäßigerweise vorgesehen sein, dass der Elastomerkörper eine radial zwischen Kernhülse und Außenhülse angeordnete Zwischenhülse aufweist, wobei die zumindest eine Elastomerlage zwischen Kernhülse und Zwischenhülse und eine weitere Elastomerlage zwischen Zwischenhülse und Außenhülse des Elastomerkörpers angeordnet sind. Zweckmäßigerweise kann dabei vorgesehen sein, dass die innere Elastomerlage zwischen Kernhülse und Zwischenhülse mit diesen stoffschlüssig durch Anvulkanisieren mit diesen verbunden sind und darüber hinaus die radial außenliegende, weitere Elastomerlage zwischen Zwischenhülse und Außenhülse wiederum durch Anvulkanisieren an der Zwischenhülse und der Außenhülse stoffschlüssig verbunden sind. Bei einem zweiteiligen Elastomerkörper kann jedes, wiederum halbzylinderartiges Elastomerkörperteil insofern gegenüber der vorgenannten Ausführungsform ohne Zwischenhülse dann jeweils statt einer nun zwei Elastomerlagenhalbschalen und eine zusätzliche Zwischenhülsenhalbschale aufweisen.

Zur Bereitstellung einer Übertragung der Betriebskräfte zwischen Kernelement und Außenrohr, kann das erfindungsgemäße Buchsenlager eine solche geometrische Gestaltung zwischen Kernelement und Kernhülse des Elastomerkörpers aufweisen, dass ein Formschluss zwischen Kernelement und Kernhülse insbesondere in axialer bzw. Längsrichtung des Lagers vorliegt. Hierzu kann vorgesehen sein, dass das Kernelement in einen Mittenabschnitt, insbesondere in einem Bereich, in welchem das Kernelement von der Zwischenhülse des Elastomerkörpers aufgenommen ist, in seiner Längserstreckung zumindest eine Ein- oder Auswölbung, insbesondere in der Art einer konkaven oder konvexen Gestaltung aufweist, die etwa senkrecht zur Längsachse verläuft, wobei die zumindest eine Ein- oder Auswölbung mit einer zugeordneten und komplementär ausgebildeten Aus- bzw. Einwölbung an einer Innenseite der Kernhülse des Elastomerkörpers zur Bereitstellung des Formschlusses zwischen Kernelement und Kernhülse bzw. Elastomerkörper in Längsrichtung korrespondiert.

Es kann vorgesehen sein, dass der jeweilige Aufnahmeabschnitt des Kernhülsenabschnittes des jeweiligen Elastomerkörperteils nutförmig mit nicht konstanter bzw. variierender Nuttiefe ausgebildet ist, die zur Bereitstellung des Formschlusses in Längsrichtung korrespondiert mit der Quererstreckung des Kernelements. In einer Weiterbildung kann auch vorgesehen sein, dass das Kernelement jeweils eine Ein- oder Auswölbung in zwei zueinander entgegengesetzte Richtungen aufweist mit komplementärer Ausbildung der Kernhülse, sodass ein jeweiliger Formschluss an beiden Längskanten des Kernelements bereitgestellt ist. Unter Umständen kann auch vorgesehen sein, dass eine Spiegelsymmetrie der Längskanten des Kernelements ausgebildet ist bezüglich einer Längsebene des Kernelements, wobei Begrenzungsflächen der Kernhülse, welche die Aufnahme für das Kernelement bereitstellen komplementär ausgebildet sein können.

Vorzugsweise kann vorgesehen sein, dass das Kernelement an beiden Längsenden einen abgeflachten Flanschabschnitt aufweist, der sich in Einbaulage in Längsrichtung aus dem Elastomerkörper heraus erstreckt, wobei die Flanschabschnitte jeweils eine Durchgangsbohrung zur Aufnahme eines zugeordneten Befestigungselements aufweisen und die Durchgangsbohrungen senkrecht zur Längsachse verlaufen können.

In bestimmten Anwendungen kann es zweckmäßig sein, für das Auftreten von hohen Betriebskräften eine relative Auslenkung der Kernhülse des Elastomerkörpers und damit des Kernelements relativ zur Außenhülse des Elastomerkörpers bzw. des Außenrohrs in axialer Richtung zu beschränken. Dabei kann vorgesehen sein, dass das Buchsenlager eingerichtet und ausgebildet ist, ausgehend aus einer Ruhebetriebsanordnung der Bauteile des Buchsenlagers eine betriebsbedingte relative axiale, d.h. in Längsrichtung orientierte Verschiebung der Kernhülse des Elastomerkörpers zu der Außenhülse des Elastomerkörpers auf einen vorgegebenen Grenzwert zu beschränken.

Hierzu kann vorgesehen sein, dass das Kernelement in Längsrichtung innen zu dem zumindest einen Befestigungsabschnitt zwei sich zwischen den Hauptebenen des Kernelements und sich in einer Querrichtung entgegengesetzt erstreckende Vorsprünge aufweist zur Bereitstellung eines Längsanschlages, der zwei in Querrichtung beabstandete Anschlagsflächen aufweisen kann. Je nach Ausführungsform kann dieser Längsanschlag direkt oder indirekt mit einem zugeordneten Abschnitt des Elastomerkörpers zur Bereitstellung der Beschränkung einer relativen, betriebsbedingten Verschiebung der Kernhülse des Elastomerkörpers zur Außenhülse des Elastomerkörpers wirken.

Zur Bereitstellung der beschriebenen relativen Bewegungsbeschränkung zwischen Kernhülse und Außenhülse des Elastomerkörpers, kann zweckmäßigerweise ein in Längsrichtung zwischen dem zumindest einen Befestigungsabschnitt des Kernelements und dem Elastomerkörper angeordnetes Anschlagselement, insbesondere ein scheibenartiges Anschlagselement, vorgesehen sein, das in Längsrichtung durch das Kernelement abgestützt sein kann. Vorzugsweise kann das Anschlagselement so gestaltet sein, dass es zwei Hauptflächen, insbesondere zwei etwa senkrecht zur Längsrichtung ausgerichtete Hauptflächen aufweist, wobei die dem Befestigungsabschnitt zugeordnete Hauptfläche am Kernelement, insbesondere an einer Anschlagsfläche bzw. dem Längsanschlag des Kernelements anliegt und das Anschlagselement an der dem Befestigungsabschnitt abgewandten Hauptfläche direkt oder indirekt an einer Stirnseite der Kernhülse des Elastomerkörper anliegt. Zweckmäßigerweise kann vorgesehen sein, dass sich das Anschlagselement radial nach außen erstreckt, dass sie zumindest der radialen Höhe der Außenhülse des Elastomerkörpers entspricht, derart, dass das Anschlagselement als Bewegungsbegrenzung für die Außenhülse des Elastomerkörpers bei einer betriebsbedingten relativen Lageänderung von Bauteilen des erfindungsgemäßen Lagers zueinander dienen kann.

Grundsätzlich kann die Außenhülse des Elastomerkörpers in Längsrichtung zur Kernhülse nach innen versetzt sein zur Festlegung einer freien Bewegungbarkeit der Außenhülse über eine vorgegebene Strecke im Betrieb relativ zur Kernhülse des Elastomerkörpers ausgehend von einer relativen Ruhelage der Bauteile des erfindungsgemäßen Buchsenlagers (Ruhebetriebsanordnung) zueinander durch Aufwenden von betriebsbedingter elastischer Arbeit am Elastomer des Elastomerkörpers bis die Außenhülse direkt oder indirekt an einen zugeordneten Anschlagsabschnitt der Anschlagsscheibe anschlägt.

Zum Aufziehen des Anschlagselementes auf das Kernelement, gegebenenfalls bis zur Anlage an die in Längsrichtung innen zum Befestigungsabschnitt des Kernelements angeordneten, und sich in Querrichtung und die Dickenrichtung erstreckenden Vorsprünge, kann zweckmäßigerweise vorgesehen sein, dass das Anschlagselement einstückig ausgebildet ist und eine schlitzartige Durchführung zum Aufstecken des Anschlagselementes auf das Kernelement aufweist.

Um zum Zeitpunkt des direkten oder indirekten Anschlagens der Außenhülse des Elastomerkörpers gegen ein sich am Kernelement abstützendes Anschlagselement bzw. eine Anschlagsscheibe bereitzustellen, kann zweckmäßigerweise vorgesehen sein, dass die Außenhülse an ihrer dem Anschlagselement zugewandten Stirnseite einen Ringflansch aufweist, der sich zur Lagerachse radial nach außen erstreckt. Insbesondere kann der Ringflansch so ausgebildet sein, dass dessen Hauptbegrenzungsflächen etwa senkrecht zur Längsrichtung bzw. Lagerachse verlaufen. Je nach Ausführungsform kann dieser Ringflansch direkt oder indirekt einen Längsanschlag zur Wechselwirkung mit dem Kernelement bzw. dem vom Kernelement in Längsrichtung abgestützten Anschlagselement bereitstellen. In einer besonders zweckmäßigen Ausführungsform kann vorgesehen sein, dass an der dem Anschlagselement zugewandten Stirnfläche (Hauptfläche) des Ringflansches zumindest ein, insbesondere mehrere, umfänglich beabstandete Elastomerpuffer vorgesehen sind, die sich mit einer vorgegebenen Höhe in axialer Richtung (Längsrichtung) erstrecken, sodass dieser bzw. diese Elastomerpuffer beim Überschreiten einer vorgegebenen relativen Bewegung von Außenhülse und Kernhülse des Elastomerkörpers gegen das Anschlagselement stoßen, und das erfindungsgemäße Buchsenlager nach dem beschriebenen Anschlagskontakt eine im Vergleich vor dem Kontakt extrem hohe axiale Steifigkeit aufweist und damit eine weitere relative axiale Auslenkung der genannten Teile des Elastomerkörpers im Wesentlichen verhindert ist.

Die beschriebene Gestaltung des erfindungsgemäßen Buchsenlagers ermöglicht die Verwendung eines vom Strang abgelenkten Metall-Strangpressprofils als Kernelement, wobei in vielen Anwendungsfällen das so hergestellte Kernelement keiner weiteren Behandlung, beispielsweise einer Oberflächenbehandlung oder eines weiteren Umformungsschrittes bedarf.

Es kann zweckmäßigerweise vorgesehen sein, dass zum Ausgleich von Herstellungstoleranzen und/oder zur Vermeidung von Betriebsgeräuschen bei der Verwendung des erfindungsgemäßen Buchsenlagers, die die Aufnahme der Kernhülse des Elastomerkörpers festlegenden Flächen und/oder einander zugeordnete Anlagenflächen der zumindest beiden Teile des Elastomerkörpers elastomerbeschichtet sind.

Zur Bereitstellung eines vorgegebenen Soll-Maßes des erfindungsgemäßen Buchsenlagers in radialer Richtung und/oder zur Bereitstellung eines erfindungsgemäßen Buchsenlagers mit radial vorgespanntem Elastomermaterial, kann zweckmäßigerweise vorgesehen sein, dass der Elastomerkörper durch radiales Stauchen des Außenrohrs und damit der radial innen zum Außenrohr angeordneten Bauteile des Buchsenlagers in radialer Richtung vorgespannt ist.

Die einzelnen Bauteile des erfindungsgemäßen Buchsenlagers können unterschiedliche Materialien umfassen. Beispielsweise kann das Kernelement als Strangpressprofil beispielsweise aus Stahl oder als Strangpressprofil einer Aluminiumlegierung ausgebildet sein. Die Anschlagsscheibe kann wiederum aus Aluminium oder Stahl ausgebildet sein, wobei auch hier eine Herstellung mittels Ablängung eines zugeordneten Strangpressprofils zweckmäßig sein kann. Die Kernhülse des Elastomerkörpers bzw. deren Einzelbestandteile können einen Kunststoff, insbesondere einen glasfaserverstärkten Kunststoff, umfassen bzw. aus einem solchen hergestellt sein. Gleiches gilt für eine je nach Ausführungsform vorgesehene Zwischenhülse und/oder die Außenhülse des Elastomerkörpers bzw. deren jeweiligen Halbschalen der Abschnitte. Als Kunststoffmaterial kann beispielsweise ein Polyamid verwendet werden oder ein anderer Kunststoff mit ähnlichen Eigenschaften. Das Außenrohr des erfindungsgemäßen Buchsenlagers kann in der Regel aus einem Aluminium- oder einem Stahlmaterial ausgebildet sein, gleiches gilt für das Anschlagselement bzw. die Anschlagsscheibe.

Die obenstehend angegebene Aufgabe wird ferner gelöst durch ein Verfahren zur Herstellung eines Buchsenlagers, das ein sich in einer Längsrichtung erstreckendes Kernelement, einen Elastomerkörper sowie ein Außenrohr aufweist, wobei der Elastomerkörper zwischen Kernelement und Außenrohr, umfassend eine dem Elastomerkörper zugewandte Innenmantelfläche und eine dem Elastomerkörper abgewandte Außenmantelfläche, angeordnet ist, und das Kernelement zumindest einen in Einbaulage sich in Längsrichtung aus dem Elastomerkörper heraus erstreckenden Befestigungsabschnitt aufweist und das Außenrohr ausgebildet ist zur Aufnahme in einer Lageraufnahme, mit den Schritten:
- Durchführen eines Strangpressvorgangs zur Herstellung eines Strangs mit vorgegebenem Profil für das Erzeugen des Kernelements;
- Ablängen des Kernelements, umfassend zwei parallel zueinander verlaufende Schnittflächen vom hergestellten Strang, die durch eine vorgegebene Kernelementdicke in eine Dickenrichtung senkrecht zur Längserstreckung beabstandet sind;
- Bereitstellen des zweiteiligen Elastomerkörpers, deren beide Teile jeweils einen sich umfänglich erstreckenden Kernhülsenabschnitt, einen Außenhülsenabschnitt und einen zwischen Kernhülsenabschnitt und Außenhülsenabschnitt angeordneten Elastomerlagenabschnitt aufweisen;
- Bereitstellen des Außenrohrs des Buchsenlagers
- Zusammenfügen des Kernelements und der beiden Elastomerkörperteile durch die Schritte:
   - Ausrichten des Kernelements und des ersten Elastomerkörperteils zueinander in Längsrichtung;
   - Ausrichten des Kernelements und des zweiten Elastomerkörperteils zueinander in Längsrichtung;
   - relatives Aufeinanderzubewegen des ersten Elastomerkörperteils und des Kernelements zueinander in eine Richtung senkrecht zur Längsrichtung und senkrecht zur Dickenrichtung des Kernelements, sodass das Kernelement über einen vorgegebenen Längsabschnitt in einer Aufnahmenut des Kernhülsenabschnitts des ersten Elastomerkörperteils aufgenommen wird;
- Relatives Aufeinanderzubewegen des zweiten Elastomerkörperteils und des Kernelements zueinander in einer Richtung senkrecht zur Längsrichtung und senkrecht zur Dickenrichtung des Kernelements, sodass das Kernelement abschnittsweise in einer Aufnahmenut des Kernhülsenabschnitts des zweiten Elastomerkörperteils aufgenommen wird, wobei im zusammengefügten Zustand von Kernelement und der beiden Elastomerkörperteile, das Kernelement über den vorgegebenen Längsabschnitt vollständig in den Aufnahmenuten aufgenommen wird und aneinander zugeordnete Anlagenflächen der beiden Elastomerkörperteile aneinander liegen, wobei durch eine komplementäre Gestaltung des Nutgrundes der Aufnahmenuten und diesen zugeordneten Anlageflächen des Kernelements ein Formschluss in Längsrichtung zwischen Kernelement und Elastomerkörper bereitgestellt wird;
- Aufpressen des Außenrohrs in Längsrichtung auf die zusammengesetzten Teile Kernelement und Elastomerkörper, wodurch der Formschluss in Längsrichtung zwischen Elastomerkörper und Kernelement fixiert wird und die beiden Teile des Elastomerkörpers zueinander fixiert werden.

Es sei bemerkt, dass erfindungsgemäß und anspruchsgemäß die Verfahrensschritte des relativen Aufeinanderzubewegens des zweiten und erste Elastomerkörperteils und des Kernelements auch gleichzeitig erfolgen können.

Vorzugsweise kann bei der Herstellung des erfindungsgemäßen Buchsenlagers vorgesehen sein, dass das vom Strang abgelängte Kernelement vor dem Zusammensetzen der Bauteile des Lagers keine weitere Bearbeitung, insbesondere keine Oberflächenbearbeitung erfährt.

Zur Einstellung eines vorgegebenen radialen, axialen, torsionalen und kardanischen Ansprechverhaltens bzw. Steifigkeit des erfindungsgemäßen Buchsenlagers, kann zweckmäßigerweise vorgesehen sein, dass die zumindest eine Elastomerlage mit der Kernhülse als auch mit der Außenhülse oder einer Zwischenhülse stoffschlüssig verbunden ist.

Vorzugsweise kann vorgesehen sein, dass in solchen Ausführungsformen, bei welchen der Elastomerkörper sich aus zwei Elastomerkörperteilen zusammensetzt, vorgesehen ist, dass diese etwa halbzylinderartig und insbesondere identisch aufgebaut sind, wobei sich einander zugeordnete Grenzflächen der beiden Teile über die gesamte Längserstreckung des zusammengesetzten Elastomerkörpers erstrecken können, d.h. parallel zur Längsachse des Lagers verlaufen.

Die Erfindung wird im Folgenden durch das Beschreiben einer Ausführungsform des erfindungsgemäßen Buchsenlagers nebst Abwandlungen auf der Grundlage der beiliegenden Figuren erläutert, wobei
- Figur 1:: in einer perspektivischen Schrägansicht eine Ausführungsform des erfindungsgemäßen Buchsenlagers;
- Figur 2:: das Buchsenlager der Figur 1 in einer Explosionsdarstellung;
- Figur 3a:: das Kernelement sowie die dem Kernelement zugeordnete Anschlagsscheibe des erfindungsgemäßen Buchsenlagers der Figur 1 in einem nicht zusammengesetzten Zustand;
- Figur 3b:: das Kernelement sowie die Anschlagsscheibe der Figur 3a in einem zusammengesetzten Zustand;
- Figur 4a:: eine Elastomerkörperhälfte des elastomeren Buchsenlagers der Figur 2;
- Figur 4b:: eine Explosionsdarstellung der Elastomerkörperhälfte der Figur 4a;
- Figur 5a:: das erfindungsgemäße Buchsenlager der Figur 1 in einer Seitenansicht senkrecht auf einer Hauptfläche des Kernelements;
- Figur 5b:: das erfindungsgemäße Buchsenlager der Figur 1 in einer Seitenansicht senkrecht zur Perspektive der Figur 5a und
- Figur 5c:: das Buchsenlager der Figur 1 in einer Schnittdarstellung in der in Figur 5b angegebenen Ebene S-S zeigt.

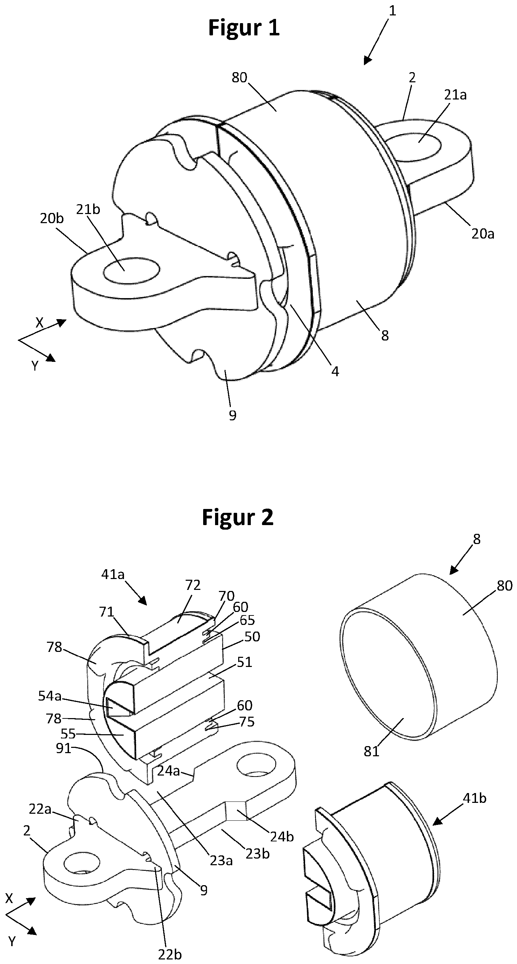

Figur 1 zeigt ein erfindungsgemäß gestaltetes Buchsenlager 1 für ein Kraftfahrzeug wie es beispielsweise in einem Querlenker einer Radaufhängung zur Ankopplung an einen Hinterachsträger einsetzbar ist. Das erfindungsgemäße Buchsenlager 1 der Figur 1 umfasst ein metallenes, sich in eine Längsrichtung X mit größtem Maß streckendes Kernelement 2, das in der beschriebenen Ausführungsform aus einem Aluminiumstrang eines Strangpressprofils abgelängt ist. Ein Elastomerkörper 4 ist radial außen zur Längsachse bzw. zur Längserstreckung des Kernelements 2 angeordnet, wobei der Elastomerkörper 4 über einen Mittenabschnitt der Längserstreckung des Kernelements 2 dieses in einer zugeordneten Aufnahme 51 aufnimmt. Das Lager wird radial nach außen durch ein hier umfänglich geschlossenes Außenrohr 8 abgeschlossen.

In der dargestellten Ausführungsform weist das Kernelement 2 zwei Befestigungsabschnitte 20a, 20b auf, welche sich in Längsrichtung X aus dem Elastomerkörper 4 heraus erstrecken und jeweils eine Durchführung 21a, 21 b aufweisen, die sich in eine Dickenrichtung Z des Kernelements 2 erstrecken, welche der Ablängrichtung des Aluminimum-Strangpressprofils entspricht. Die Befestigungsabschnitte 20a, 20b stellen in Längsrichtung die Endabschnitte des Kernelements 2 dar.

In der beschriebenen Ausführungsform kann das erfindungsgemäße Buchsenlager darüber hinaus ein Anschlagselement in Form einer Platte oder Scheibe aufweisen, die in Längsrichtung X zwischen einem Befestigungsabschnitt, hier dem Befestigungsabschnitt 20b des Kernelements 2 und dem Elastomerkörper 4 angeordnet ist. Weitere Details zur Anordnung und zur Funktion des Anschlagselements 9 wird untenstehend erläutert.

In der beschriebenen Anwendung kann das erfindungsgemäße Buchsenlager 1 im Bereich der Außenmantelfläche 80 des Außenrohres 8 in einer zugehörigen Lageraufnahme bzw. einem zugehörigen Lagerauge des schon angegebenen Querlenkers eingesetzt werden, insbesondere durch Einpressen. Eine Befestigung am angegebenen Hinterachsträger erfolgt bei dem Lager der Figur 1 an den beiden längsendig angeordneten Befestigungsabschnitten 20a, 20b mittels einer jeweiligen Bolzenverbindung, wobei sich der jeweilige Bolzen durch die zugeordnete Durchführung 21a, 21b und einen jeweiligen Abschnitt am Hinterachsträger hindurch erstreckt.

Figur 2 zeigt das erfindungsgemäße Buchsenlager 1 in einer Explosionsdarstellung, wobei das Kernelement 2 und das Anschlagselement 9 im schon zueinander angeordneten Zustand dargestellt ist, bei welchem das Anschlagselement in Längsrichtung -X am Kernelement abgestützt ist. In der beschriebenen Ausführungsform weist das Buchsenlager 1 einen Elastomerkörper 4 (siehe Figur 1) auf, der sich aus zwei Elastomerkörperhälften 41a, 41b zusammensetzt. Diese können in der angegebenen Ausführungsform identisch aufgebaut sein, hier halbzylinderartig mit einer jeweiligen Schnittfläche, in welcher die Zylinderachse liegt. Im zusammengesetzten Zustand der Elastomerkörperteile 41a,b können die jeweiligen Schnittflächen aneinander liegen, derart, dass sich die gleichartigen Abschnitte wie Außenhülsenhalbschale und Kernhülsenhalbschalen zu einer jeweiligen umfänglich geschlossenen Außenhülse bzw. Kernhülse ergänzen. Gleiches gilt dann auch für die weiteren Elemente des Elastomerkörpers wie Elastomerlagen und Zwischenhülse.

Jede der beiden Elastomerkörperhälften 41a, 41b weist eine innenliegende Kernhülsenhalbschale 50 auf, die in der beschriebenen Ausführungsform aus einem Kunststoffmaterial wie Polyamid hergestellt sein kann. Diese weist eine parallel zur Lagerachse und mittig, insbesondere koaxial zur Lagerachse angeordnete Aufnahme 51 in Form einer Nut auf, deren Nutgrund 52 über die Längserstreckung bezüglich ihrer Nuthöhe in noch zu beschreibender Art variiert. Die beiden Elastomerkörperhälften 41a, 41b werden radial außen durch eine jeweilige Außenhülsenhalbschale 70 abgeschlossen, die wiederum aus einem Kunststoffmaterial hergestellt sein kann, beispielsweise Polyamid, insbesondere faserverstärktes Polyamid. Jede der Außenhülsenhalbschalen weist stirnseitig zum Anschlagselement 9 einen Ringflanschabschnitt 71 auf, der sich aufgrund der Zweiteiligkeit des Elastomerkörpers in der beschriebenen Ausführungsform über einen Umfangsabschnitt von 180 Grad erstreckt. Zwischen der Kernhülsenhalbschale 50 und Außenhülsenhalbschale 70 ist erfindungsgemäß zumindest eine Elastomerlage angeordnet, wobei vorzugsweise Kernhülsenhalbschale 50 und Außenhülsenhalbschale 70 stoffschlüssig mit dem Elastomer verbunden sind, insbesondere durch Anvulkanisieren.

In der beschriebenen Ausführungsform weisen die Elastomerkörperhälften 41a, 41b zwischen der jeweiligen Kernhülsenhalbschale 50 und der Außenhülsenhalbschale 70 jeweils eine Zwischenhülsenhalbschale 60 auf, die aus einem Metallmaterial oder aus einem Kunststoffmaterial ausgebildet sein kann. In dieser Ausführungsform umfasst jede der beiden Elastomerkörperhälften 41a, 41b zwei Elastomerlagen 65, 75 auf, wobei die erstgenannte zwischen der radialen Außenmantelfläche der Kernhülsenhalbschale 50 und der radialen Innenmantelfläche der Zwischenhülsenhalbschale 60 angeordnet und stoffschlüssig an den genannten Flächen der beiden Bauteile anhaftet. In ähnlicher Weise ist die zweite Elastomerlage 75 zwischen der Außenmantelfläche der Zwischenhülsenhalbschale 60 und der Innenmantelfläche der Außenhülsenhalbschale 70 anhaftend angeordnet.

In der beschriebenen Ausführungsform ist die Längserstreckung der beiden Elastomerlagen 65, 75 in einem Mittenabschnitt des Elastomerkörpers 4 ausgebildet, die weniger als zwei Drittel, insbesondere etwa der Hälfte der Längserstreckung der Kernhülsenhalbschale 50 entspricht zur Bereitstellung einer vorgegebenen kardanischen Auslenkbarkeit des Lagers.

Erkennbar weist das Kernelement 2 in seiner Erstreckung in Querrichtung Y in einem Mittenlängsabschnitt der an die Längserstreckung der Kernhülsenhalbschale 50 angepasst ist, jeweils eine Taillierung 23a, 23a auf und in der beschriebenen Ausführungsform ist diese Taillierung 23a, 23b trapezförmig gestaltet und komplementär an den Verlauf des Nutgrundes 52 der Aufnahmenut 51 der Kernhülsenhalbschale 50 angepasst. In anderen Ausführungsformen können auch Einwölbungen oder Auswölbungen anderer Gestaltungen in diesem Abschnitt des Kernelements vorgesehen sein, wobei der Nutgrund 52 der Kernhülsenhalbschale 50 in entsprechender Weise komplementär dazu ausgebildet ist, um nach der Aufnahme des Kernelements 2 durch die jeweiligen Kernhülsenhalbschalen 50 einen axialen Formschluss zwischen Kernelement 2 und jeweiliger Kernhülsenhalbschale 50 auszubilden. Es sei bemerkt, dass dieser Formschluss in axialer Richtung durch zugeordnete Anlageflächen, von welcher in Figur 2 die Formschlussflächen 24a, 24b des Kernelements und die Formschlussfläche 54a der Kernhülsenhalbschale 50 sichtbar sind, nicht in jedem Fall eben, sondern auch gekrümmt ausgebildet sein können.

Zur Beschränkung einer relativen Auslenkung der Außenhülsenhalbschale 70 zur Kernhülsenhalbschale 50 beim Auftreten von axialen Betriebskräften liegt in zusammengesetztem Zustand die Stirnfläche 55 der Kernhülsenhalbschale 50 direkt oder indirekt an der innenliegenden Hauptfläche 91 des Anschlagselements 9 an, während ein an der Stirnseite der Außenhülsenhalbschale 70 ausgebildeter Ringflanschabschnitt 71, der in der beschriebenen Ausführungsform umfänglich beabstandete Pufferelemente 78 aus Elastomer trägt, zur innenliegenden Hauptfläche 91 beabstandet ist in einer Ruhebetriebslage (Ruhebetriebsanordnung) der Bauteile des erfindungsgemäßen Buchsenlagers 1 zueinander.

Beim Zusammenbau der in Figur 2 angegebenen Bauteile des erfindungsgemäßen Buchsenlagers der Figur 1 werden die beiden Elastomerkörperhälften 41a, 41b in Bezug auf die Taillierungsabschnitte des Kernelements und die komplementär ausgebildeten Aufnahmen 51 der Elastomerkörperhälften in Längsrichtung X zueinander ausgerichtet und in Querrichtung Y beabstandet zueinander ausgerichtet, so dass z.B. durch eine relative Querbewegung in +Y-Richtung der einen Elastomerkörperhälfte und in -Y-Richtung der anderen Elastomerkörperhälfte der Bauteile zueinander das Kernelement 2 in den Aufnahmen 51 der beiden Kernhülsenhalbschalen 50 im beschriebenen Mittenbereich aufgenommen ist und die vorzugsweise ebenen Begrenzungsflächen beider Kernhülsenhalbschalen 50, beider Elastomerlagen 65, beider Zwischenhülsenhalbschalen 60, beider Elastomerlagen 75 und beider Außenhülsenhalbschalen 70 aneinander liegen und zusammen den Elastomerkörper 4 bilden. Die beschriebene Kopplung der beiden Elastomerkörperhälften 41, 41b an das Kernelement 2 kann je nach Ausführungsform nacheinander, jedoch auch in einer speziellen Vorrichtung gleichzeitig erfolgen.

Zur radialen Fixierung der beiden Elastomerkörperhälften 41a, 41b an das Kernelement 2 wird in einem nachfolgenden Schritt das Außenrohr 80 auf den zusammengesetzten Elastomerkörper 4 in axialer Richtung X aufgepresst, so dass das Außenrohr 80 mit seiner Innenmantelfläche 81 an der Außenmantelfläche 72 der Außenhülsenhalbschale 70 anliegt und den beschriebenen Formschluss zwischen Kernelement und Elastomerkörper dadurch fixiert, dass eine relative Bewegung der Elastomerkörperteile 41a, b zueinander in radialer Richtung blockiert ist.

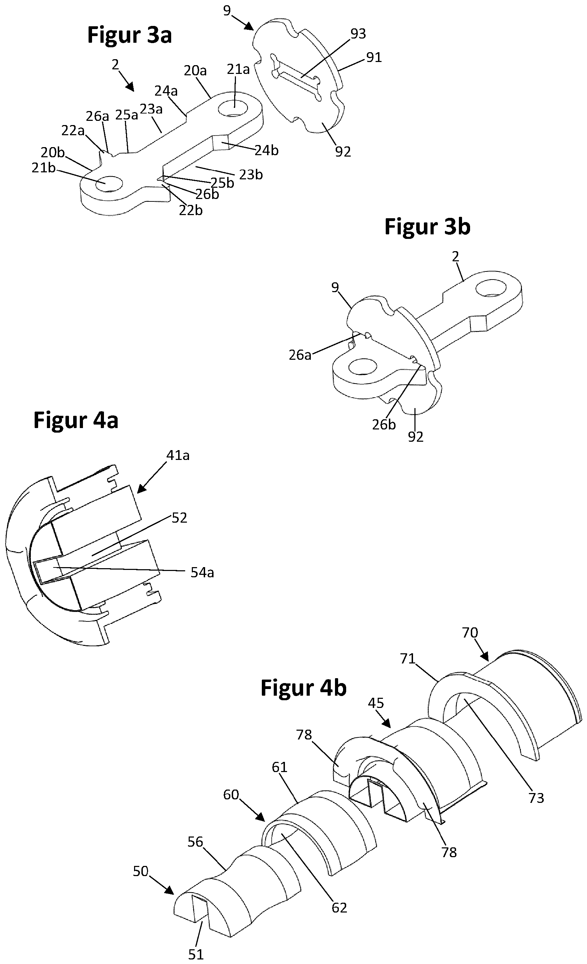

Während Figur 3a eine zur Längsrichtung X ausgerichtete Anordnung des Kernelements 2 und des Anschlagselements 9 zeigt, sind die beiden Bauteile in Figur 3b in ihrer gegenseitigen Betriebsposition angegeben. In der beschriebenen Ausführungsform weist das erfindungsgemäße Buchsenlager 1 eine Beschränkung der gegenseitigen Verschiebbarkeit der Kernhülsenhalbschale 50 gegen die Außenhülsenhalbschale in eine Richtung (-X) zur Längsachse des Buchsenlagers 1 auf, während in die entgegengesetzte Richtung keine Beschränkung vorgesehen ist. In einer nicht dargestellten Ausführungsform des erfindungsgemäßen Lagers kann auch eine solche Beschränkung in beide Orientierungen +X/-X in im Wesentlichen ähnlicher Art realisiert sein. Bei der beschriebenen Ausführungsform weist das Kernelement 2 in Längsrichtung X innen zum Befestigungsabschnitt 20b zwei sich nach außen in Querrichtung Y erstreckende Vorsprünge 20a, 20b auf, welche in Richtung zum zweiten Befestigungsabschnitt 20a eine jeweilige Anlagefläche 26a, 26b bereitstellen, die im Wesentlichen normal zur Längsrichtung X ausgebildet sein können. Das Anschlagselement 9, hier platten- oder scheibenartig ausgebildet, weist einen Aufnahmeschlitz 93 auf, so dass die Scheibe 9 nach der in Figur 3a angegebenen Ausrichtung zum Kernelement 2 über dieses schiebbar ist bis die Anlageflächen 26a, 26b des Kernelements zur Anlage mit der äußeren Hauptfläche oder Außenfläche 92 des Anschlagselementes 9 kommt, so dass das Anschlagselement 9 und damit eventuell an deren Innenfläche 91 anliegende oder anschlagende Abschnitte des Elastomerkörpers 4 in ihrer Bewegung in Richtung zum nächstliegenden Befestigungsabschnitt 20b blockiert sind.

Während Figur 4a die fertiggestellte Elastomerkörperhälfte 41a in einer perspektivischen Schrägansicht zeigt, sind in Figur 4b die Einzelbestandteile in einer virtuellen Explosionsdarstellung angegeben, um den detaillierten Aufbau der Elastomerkörperhälfte 41a, 41b zu erläutern. Es sei nochmals bemerkt, dass in der beschriebenen Ausführungsform die Bestandteile einer Elastomerkörperhälfte 41a, 41b stoffschlüssig miteinander verbunden sind und insofern die in Figur 4b angegebene Anordnung der Bestandteile einer Elastomerkörperhälfte nicht realisierbar ist. Jede der Elastomerkörperhälften 41a, 41b weist die Kernhülsenhalbschale 50 auf, welche etwa halbzylinderförmig ausgebildet ist mit einer Nutaufnahme 51, die in Bezug auf die Nutbreite angepasst ist an die Dickenerstreckung Z des Kernelements 2, d.h. zu dieser identisch ist. In der beschriebenen Ausführungsform weist die Kernhülsenhalbschale 50 in einem Mittenabschnitt an ihrer Außenmantelfläche eine Taillierung oder eine Einwölbung 56 auf, die mit einer an der Innenmantelseite der Zwischenhülsenhalbschale 60 vorgesehene Ausbauchung 62 in Bezug auf ihre Längserstreckung korrespondiert. Im fertiggestellten Zustand ist zwischen der Kernhülsenhalbschale 50 und der Zwischenhülsenhalbschale 60 die Elastomerlage 65 angeordnet, siehe Figur 2. Die Zwischenhülsenhalbschale 60 weist an ihrer Außenmantelfläche mittig auch eine Ausbauchung oder Auswölbung 61 auf, die in der beschriebenen Ausführungsform mit einer an der Innenmantelfläche 81 des Außenhülsenhalbschale 70 angeordnete Einwölbung 73 korrespondiert. Auch zwischen der Innenseite der Außenhülsenhalbschale 70 und der Außenmantelfläche der Zwischenhülsenhalbschale 60, insbesondere im Bereich der Ausbauchung 62 bzw. Auswölbung 61 ist eine weitere Elastomerlage 75 angeordnet, die im Wesentlichen mit der zuerst genannten Elastomerlage 65 und der Zwischenhülsenhalbschale 60 die Dämpfungs- und Elastizitätseigenschaften des Lagers zusammen mit der jeweiligen geometrischen Anordnung der Bauteile zueinander bestimmt. Das in der Explosionsdarstellung Fig. 4b angegebene Elastomergebilde 45 zeigt ferner, dass in der beschriebenen Ausführungsform Begrenzungsflächen, beispielsweise die Begrenzungsflächen der Aufnahme 51 der Kernhülsenhalbschale 50 sowie Anlageflächen der beiden Elastomerkörperhälften 41a, 41b mit Elastomer beschichtet sind um Betriebsgeräusche bei der Verwendung des erfindungsgemäßen Buchsenlagers 1 zu vermeiden und Herstellungstoleranzen der Bauteile auszugleichen.

Wie angegeben, sind in der beschriebenen Ausführungsform die Kernhülsenhalbschalen 50 und die Außenhülsenhalbschale 70 aus einem Kunststoff, beispielsweise Polyamid, hegestellt, insbesondere durch Spritzgießen, wobei zur Verstärkung ein vorgegebener Faseranteil, insbesondere Glasfaseranteil im Bereich von etwa 0 % bis 50 % vorgesehen sein kann. Die Zwischenhülsenhalbschalen 60 können aus einem Metallmaterial wie einem Stahlblech oder einem Aluminiumblech hergestellt sein, es ist jedoch möglich, auch diese aus einem relativ zum Elastomer harten Kunststoffmaterial wie Polyamid zu gestalten. Grundsätzlich liegt es ferner im Rahmen der Erfindung, auch die Außenhülsenhalbschalen 70 des Elastomerkörpers aus einem Metallmaterial zu gestalten, was jedoch in den meisten Anwendungsfällen nicht zweckmäßig ist. Grundsätzlich weist das Material der Kernhülsenhalbschalen 50, der Außenhülsenhalbschalen 70, der Zwischenhülsenhalbschalen 60 und auch des Kernelements 2 ein sehr viel geringeres elastisches Verhalten als das Elastomer selbst auf.

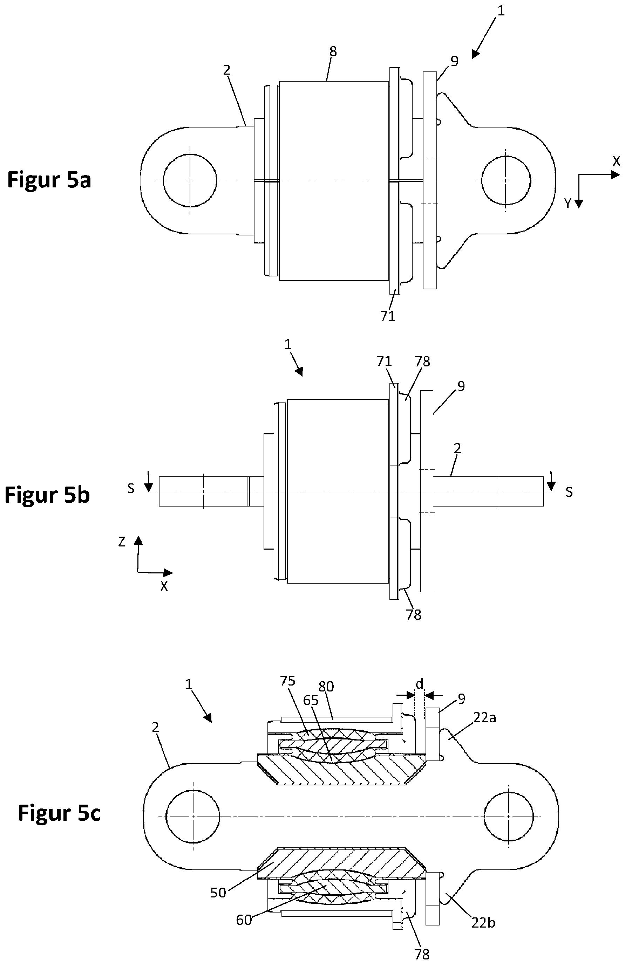

Die Figuren 5a, 5b zeigen die vorstehend beschriebene Ausführungsform des erfindungsgemäßen Buchsenlagers 1 in zwei zueinander senkrecht liegenden Seitenansichten, namentlich in Figur 5a in normaler Richtung zur Strangschnittebene des Kernelements 2, d. h. in einer Ebene, die durch die Längsrichtung X bzw. Längsachse des Buchsenlagers 1 und eine weitere Richtung Y, die senkrecht zur Längsrichtung X und senkrecht zur Dickenerstreckung Z des Kernelements 2 verläuft. Demgegenüber zeigt Figur 5b das erfindungsgemäße Buchsenlager in einer Seitenansicht mit Blick auf eine Ebene, welche die Längsachse bzw. Längserstreckungsrichtung X des Kernelements und dessen Dickenrichtung (Z-Richtung) enthält bzw. durch diese aufgespannt ist. In Figur 5b ist eine hierzu senkrechte Schnittebene S-S angegebenen, der entsprechende Schnitt ist in Figur 5c dargestellt. Diese Abbildung zeigt insbesondere den beschriebenen axialen Formschluss zwischen dem Kernelement 2 und dem Elastomerkörper 4 respektive der jeweiligen Kernhülsenhalbschale 50 durch die komplementär ausgebildete Ausnehmung bzw. Einwölbung oder Taillierung 23a, 23b des Kernelements 2 über einen vorgegebenen Mittenlängsabschnitt sowie die zugeordnete Auswölbung nach innen der Aufnahme bzw. Aufnahmenut 51 der Kernhülsenhalbschale 50. Erkennbar ist ferner die Einbauchung der Kernhülsenhalbschale 50 sowie eine in Längsrichtung X zugeordnete Ausbauchung in Richtung zur Längsachse des Lagers der der Kernhülsenhalbschale 50 zugewandten Oberfläche der Zwischenhülsenhalbschale 60, was zu einer erhöhten axialen Steifigkeit des Buchsenlagers 1 führt. In ähnlicher Weise ist die Außenmantelfläche der jeweiligen Zwischenhülsenhalbschale 60 innerhalb des Mittenbereichs umfassend eine Ausbauchung 61 nach außen gewölbt und die Innenmantelfläche der Außenhülsenhalbschale 70 umfassend eine Einbauchung 73 eingewölbt bzw. tailliert, so dass auch diese Gestaltung zu einer erhöhten axialen Steifigkeit des Lagers führt im Vergleich zu einer erfindungsgemäß auch möglichen Gestaltung, bei welcher die sich gegenüberliegenden Flächen von Kernhülsenhalbschale 50, Zwischenhülsenhalbschale 60 bzw. Zwischenhülsenhalbschale 60 und Außenhülsenhalbschale 70 parallel und insbesondere parallel zur Längsachse des Lagers verlaufen.

In einer nicht dargestellten Ausführungsform kann auch vorgesehen sein, dass der Elastomerkörper 4 bzw. beide Elastomerkörperhälften 41a, 41b nur eine einzelne Elastomerlage aufweisen, d. h. keine Zwischenhülsenhalbschale 60 umfassen. Dabei kann auch in dieser Ausführungsform eine Ein- oder Auswölbung der äußeren Mantelfläche der Kernhülsenhalbschale 50 bzw. eine hierzu angepasste, insbesondere komplementär verlaufende Ein- oder Auswölbung der Außenhülsenhalbschale 70 vorgesehen sein, um eine vorgegebene axiale Steifigkeit bzw. eine vorgegebene Kardanik des Lagers einzustellen.

### Bezugszeichenliste

- 1: Buchsenlager
- 2: Kernelement
- 4: Elastomerkörper
- 8: Außenrohr
- 9: Anschlagselement, Anschlagsscheibe
- 20a: Befestigungsabschnitt
- 20b: Befestigungsabschnitt
- 21a: Durchführung, Durchgangsbohrung
- 21b: Durchführung, Durchgangsbohrung
- 22a: Vorsprung
- 22b: Vorsprung
- 23a: Taillierung
- 23b: Taillierung
- 24a: Formschlussfläche
- 24b: Formschlussfläche
- 25a: Formschlussfläche
- 25b: Formschlussfläche
- 26a: Anlagefläche, Längsfläche
- 26b: Anlagefläche, Längsfläche
- 41a: Elastomerkörperhälfte
- 41b: Elastomerkörperhälfte
- 45: Elastomergebilde
- 50: Kernhülsenhalbschale
- 51: Aufnahme, Aufnahmenut
- 52: Nutgrund
- 54a: Formschlussfläche
- 54b: Formschlussfläche
- 55: Stirnfläche
- 56: Taillierung, Einwölbung
- 60: Zwischenhülsenhalbschale
- 61: Ausbauchung, Auswölbung
- 62: Ausbauchung, Auswölbung
- 65: Elastomerlager
- 70: Außenhülsenhalbschale
- 71: Ringflanschabschnitt
- 72: Außenmantelfläche
- 73: Taillierung, Einwölbung
- 75: Elastomerlager
- 78: Elastomerpuffer
- 80: Außenmantelfläche
- 81: Innenmantelfläche
- 91: innenseitige Hauptfläche, Innenfläche
- 92: außenseitige Hauptfläche, Außenfläche
- 93: Schlitz
- D: Kernelementdicke
- S-S: Schnittebene
- X: Längsrichtung
- Y: Querrichtung
- Z: Dickenrichtung

## Patentansprüche

1. Buchsenlager (1) für ein Kraftfahrzeug umfassend ein, sich in einer Längsrichtung (X) erstreckendes Kernelement (2), einen Elastomerkörper (4) sowie ein, das Kernelement (2) und den Elastomerkörper (4) umgreifendes und eine dem Elastomerkörper (4) zugewandte Innenmantelfläche (81) und eine dem Elastomerkörper (4) abgewandte Außenmantelfläche (80) aufweisendes Außenrohr (8), wobei das Kernelement (2) an einem Längsende einen sich in Längsrichtung (X) aus dem Elastomerkörper (4) heraus erstreckenden Befestigungsabschnitt (20a, 20b) aufweist und das Außenrohr (8) zur Anordnung in einer zugeordneten Lageraufnahme, insbesondere einer Lageraufnahme eines Lenkers ausgebildet ist, **dadurch gekennzeichnet, dass** das Kernelement (2) ein Metall-Strangpressprofil umfasst, dass der Elastomerkörper (4) mehrteilig, insbesondere zweiteilig ausgebildet ist und eine Kernhülse (50 + 50) mit einer Aufnahme zur Aufnahme des Kernelements (2) sowie eine Außenhülse und zumindest eine zwischen Kernhülse (50 + 50) und Außenhülse (70 + 70) angeordnete Elastomerlage (65 + 65, 75 + 75) umfasst, wobei das Außenrohr (8) die mehreren Teile des Elastomerkörpers (4) zueinander radial fixiert und ein Formschluss zwischen Kernelement (2) und Kernhülse (50 + 50) des Elastomerkörpers (4) in Längsrichtung (X) ausgebildet ist.

2. Buchsenlager (1) nach Anspruch 1, **dadurch gekennzeichnet, dass** das Kernelement (2) zumindest ein Paar von zwei parallel zueinander verlaufenden Schnittflächen (Hauptflächen) aufweist, wobei die Schnittflächen etwa senkrecht zur Längsrichtung (X) verlaufen.

3. Buchsenlager (1) nach Anspruch 1 oder 2, **dadurch gekennzeichnet, dass** die zumindest eine Elastomerlage (65 + 65, 75 + 75) stoffschlüssig mit der Kernhülse (50 + 50) verbunden ist.

4. Buchsenlager (1) nach Anspruch 1, 2 oder 3, **dadurch gekennzeichnet, dass** der Elastomerkörper (4) eine zwischen Kernhülse (50 + 50) und Außenhülse angeordnete Zwischenhülse aufweist, wobei die zumindest eine Elastomerlage (65 + 65 zwischen Kernhülse (50 + 50) und Zwischenhülse (60 + 60) und eine weitere Elastomerlage (75 + 75) zwischen Zwischenhülse (60 + 60) und Außenhülse (70 + 70) des Elastomerkörpers (4) angeordnet sind.

5. Buchsenlager (1) nach einem der vorstehenden Ansprüche,
**dadurch gekennzeichnet, dass** das Kernelement (2) in einem Mittenabschnitt in seiner Längserstreckung zumindest eine Ein- oder Auswölbung (23a, 23b) aufweist, die etwa senkrecht zur Längsachse verläuft, und die zumindest eine Ein- oder Auswölbung (23a, 23b) mit einer zugeordneten und komplementär ausgebildeten Aus- bzw. Einwölbung (56 + 56) an einer Innenseite der Kernhülse (50 + 50) des Elastomerkörpers (4) zur Bereitstellung des Formschlusses zwischen Kernelement (2) und Elastomerkörper (4) in Längsrichtung (X) korrespondiert bzw. zu dieser komplementär ausgebildet ist, sodass einander zugeordnete Formschlussflächen (24a,b; 54a,b) des Kernelements (2) und der Kernhülse (50 + 50) in gegenseitiger Anlage stehen.

6. Buchsenlager (1) nach einem der vorstehenden Ansprüche,
**dadurch gekennzeichnet, dass** das Kernelement (2) an dem einen und dem anderen Längsende als jeweiliger Befestigungsabschnitt (20a, b) einen abgeflachten Flanschabschnitt aufweist, der sich in Einbaulage in Längsrichtung (X) aus dem Elastomerkörper (4) heraus erstreckt, wobei die Flanschabschnitte jeweils eine Durchgangsbohrung (21a, b) zur Aufnahme eines zugeordneten Befestigungselements aufweisen und die Durchgangsbohrungen (21a, b) senkrecht zur Längsrichtung (X) verlaufen.

7. Buchsenlager (1) nach einem der vorstehenden Ansprüche,
**dadurch gekennzeichnet, dass** das Buchsenlager (1) eingerichtet und ausgebildet ist, ausgehend aus einer Ruhebetriebsanordnung der Bauteile des Buchsenlagers (1) eine betriebsbedingte relative axiale Verschiebung der Kernhülse (50 + 50) des Elastomerkörpers (4; 41a + 41b) zu der Außenhülse (70 + 70) des Elastomerkörpers (4) auf einen vorgegebenen Grenzwert im Wesentlichen zu beschränken.

8. Buchsenlager (1) nach einem der vorstehenden Ansprüche,
**dadurch gekennzeichnet, dass** das Kernelement (2) in Längsrichtung (X) innen zu dem zumindest einen Befestigungsabschnitt (20a, 20b) zwei sich in einer Querrichtung (Y) entgegengesetzt erstreckende Vorsprünge (22a, b) aufweist zur Bereitstellung eines Längsanschlages.

9. Buchsenlager (1) nach einem der vorstehenden Ansprüche, **gekennzeichnet durch** eine in Längsrichtung (X) zwischen dem zumindest einen Befestigungsabschnitt (20a, 20b) des Kernelements (2) und dem Elastomerkörper (4) angeordnetes Anschlagselement (9), das als Anschlagsscheibe ausgebildet sein kann, wobei vorzugsweise
das Anschlagselement (9) mit einer Hauptfläche (92) an einer zugeordneten Anlagefläche (26a, b) des Kernelements (2) anliegt und an einer dem Kernelement (2) abgewandten Hauptfläche (91) eine Anschlagsfläche für den Elastomerkörper (4) bereitstellt.

10. Buchsenlager (1) nach Anspruch 9, **dadurch gekennzeichnet, dass** die Kernhülse (50 + 50) des Elastomerkörpers (4) in einer Ruhebetriebsanordnung des Lagers stirnseitig an dem Anschlagselement anliegt und die Außenhülse (70 + 70) des Elastomerkörpers (4) stirnseitig zum Anschlagselement beabstandet ist.

11. Buchsenlager (1) nach einem der Ansprüche 1 bis 10,
**dadurch gekennzeichnet, dass** die Außenhülse (70 + 70) des Elastomerkörpers (4) stirnseitig an einem Längsende einen Ringflansch (71 + 71) aufweist, der einen Längsanschlag zur Wechselwirkung mit dem Kernelement (2) bereitstellt.

12. Buchsenlager (1) nach einem der vorstehenden Ansprüche,
**dadurch gekennzeichnet, dass** die die Aufnahme (51 + 51) der Kernhülse (50 + 50) des Elastomerkörpers (4) festlegenden Flächen und/oder einander zugeordnete Kontaktflächen der zumindest zwei Elastomerkörperteile (41a, 41b) elastomerbeschichtet sind.

13. Buchsenlager (1) nach einem der vorstehenden Ansprüche,
**dadurch gekennzeichnet, dass** der Elastomerkörper (4) durch radiales Stauchen des Außenrohrs (8) in radialer Richtung vorgespannt ist.

14. Verfahren zur Herstellung eines Buchsenlagers (1), das ein sich in einer Längsrichtung (X) erstreckendes Kernelement (2), einen Elastomerkörper (4) sowie ein Außenrohr (8) aufweist, wobei der Elastomerkörper (4) zwischen Kernelement (2) und Außenrohr (8), umfassend eine dem Elastomerkörper (4) zugewandte Innenmantelfläche (81) und eine dem Elastomerkörper (4) abgewandte Außenmantelfläche (80), angeordnet ist, und das Kernelement (2) zumindest einen in Einbaulage sich in Längsrichtung (X) aus dem Elastomerkörper (4) heraus erstreckenden Befestigungsabschnitt (20a, 20b) aufweist und das Außenrohr (8) zur Anordnung in einer zugeordneten Lageraufnahme, insbesondere einer Lageraufnahme eines Lenkers ausgebildet ist, mit den Schritten:
- Durchführen eines Strangpressvorganges zur Herstellung eines Strangs für das Erzeugen eines Kernelements (2);
- Ablängen des Kernelements (2) umfassend zwei parallel zueinander verlaufende Schnittflächen vom hergestellten Strang, die durch eine vorgegebene Kernelementdicke (d) beabstandet sind;
- Bereitstellen des zweiteiligen Elastomerkörpers (4); 41a + 41b), deren beide Teile jeweils einen Kernhülsenhalbschale (50), einen Außenhülsenhalbschale (70) und einen zwischen Kernhülsenhalbschale und Außenhülsenhalbschale (70) angeordneten Elastomerlagenabschnitt (65, 75) aufweisen;
- Bereitstellen des Außenrohrs (8) des Buchsenlagers (1)
- Zusammenfügen des Kernelements (2) und der beiden Elastomerkörperteile (41a, 41b) durch:
- Ausrichten des Kernelements (2) und des ersten Elastomerkörperteils (41a) zueinander in Längsrichtung (X);
- Ausrichten des Kernelements (2) und des zweiten Elastomerkörperteils (41b) zueinander in Längsrichtung (X);
- relatives Aufeinanderzubewegen des ersten Elastomerkörperteils (41a) und des Kernelements (2) zueinander in eine Richtung (Y) senkrecht zur Längsrichtung (X) und senkrecht zur Dickenrichtung (Z) des Kernelements (2), sodass das Kernelement (2) über einen vorgegebenen Längsabschnitt in einer Aufnahmenut (51) des Kernhülsenhalbschale (70) des ersten Elastomerkörperteils (41a) aufgenommen wird;
- relatives Aufeinanderzubewegen des zweiten Elastomerkörpersteils (41b) und des Kernelements (2) zueinander in eine Richtung senkrecht zur Längsrichtung (X) und senkrecht zur Dickenrichtung (Z) des Kernelements (2), sodass das Kernelement (2) abschnittsweise in einer Aufnahmenut (51) der Kernhülsenhalbschale (50) des zweiten Elastomerkörperteils (41b) aufgenommen wird, wobei im zusammengefügten Zustand von Kernelement (2) und der beiden Elastomerkörperteile das Kernelement (2) über den vorgegebenen Längsabschnitt vollständig in den Aufnahmenuten (51, 51) aufgenommen wird und einander zugeordnete Anlageflächen der beiden Elastomerkörperteile (41a, 41b) aneinanderliegen, und wobei durch eine komplementäre Gestaltung des Nutgrundes (52) der Aufnahmenuten und diesen zugeordneten Anlageflächen (24a,b; 25a,b) des Kernelements (2) ein Formschluss in Längsrichtung (X) zwischen Kernelement (2) und Elastomerkörper (4) bereitgestellt wird;
- Aufpressen des Außenrohrs (8) in Längsrichtung (X) auf die zusammengesetzten Teile Kernelement (2) und Elastomerkörper (4), sodass durch das Außenrohr (8) die relative Lage der mehreren Teile (41a, b) des Elastomerkörpers (4) zueinander mit darin aufgenommenem Kernelement in radialer Richtung fixiert wird, wobei vorzugsweise
das vom Strang abgelängte Kernelement (2) vor dem Zusammenfügen der Bauteile des Lagers keine Bearbeitung, insbesondere keine Oberflächenbearbeitung und/oder Umformung erfährt.

15. Verfahren nach Anspruch 14, **dadurch**
**gekennzeichnet, dass** die zumindest eine Elastomerlage (65) sowohl mit der Kernhülse (50 + 50) als auch mit der Außenhülse (70 + 70) oder einer Zwischenhülse (60 + 60) stoffschlüssig verbunden wird.
